# EUROPÄISCHE PATENTANMELDUNG

(11) **EP 1 702 899 A2**
(43) Veröffentlichungstag der Anmeldung: **20.09.2006**
(21) Anmeldenummer: 06005283.4
(22) Anmeldetag: 15.03.2006
(51) Int. Cl.: C04B 28/02

(54) **Anorganisches hydraulisches Bindemittel**

(30) Priorität: 17.03.2005 DE 102005012317
(71) Anmelder: Lukas, Walter, Prof. Dr., 6080 Igis (AT)
(72) Erfinder: Lukas, Walter, Prof.,Dr., 6080 Igls (AT)
(74) Vertreter: Lippert, Stachow & Partner

(57) **Zusammenfassung**

Die Erfindung betrifft ein anorganisches hydraulisches Bindemittel, enthaltend ein Gemisch aus gemahlenem Zementklinker und wenigstens einem Zusatz- und/oder Zumahlstoff, wobei der Klinkeranteil im Bindemittel 65% nicht übersteigt und der Anteil der Kornfraktion von 0 - 10 µm in dem wenigstens einen Zusatz-und/oder Zumahlststoff vergrössert ist, um die Korngrössenverteilung des Bindemittels an solche von CEMI zumindest anzunähern.

## Beschreibung

Die Erfindung betrifft ein anorganisches hydraulisches Bindemittel, welches gemahlenen Zementklinker, wenigstens eine gemahlene Sulfatkomponente und wenigstens einen Zusatzstoff und/oder Zumahlstoff enthält.

Bei derartigen anorganischen Bindemitteln, die im allgemeinen unter dem Begriff Zement zusammengefasst werden und einen Korngrössenbereich von 0 - etwa 200 µm aufweisen, wobei normalerweise der Korngrössenbereich von 1 - 100 µm etwa 90% des Bindemittels ausmacht, hängen das Abbindeverhalten und andere Frischmörteleigenschaften, z. B. Wasserbedarf, Fliessmittelbedarf und Schwindverhalten, weitgehend von der Zusammensetzung dieser Bindemittel ab, so dass häufig ein Zement mit einer bestimmten Zusammensetzung zur Erzielung z. B. des jeweils gewünschten Abbindeverhaltens gewählt wird. Bei der Herstellung von Betonbauten, beispielsweise bei der Auskleidung eines Tunnels, kommt es in vielen Fällen für den Arbeitsfortschritt entscheidend darauf an, in welchem zeitlichen Abstand vom Einbringen des Betons dieser so weit abgebunden und somit erhärtet ist, dass die Schalung entfernt und für das Einbringen des Betons für den nächsten Bauabschnitt umgesetzt werden kann.

Grundsätzlich besteht bezüglich der Geschwindigkeit, mit welcher der Beton aushärtet und eine bestimmte Festigkeit erreicht, einerseits und der stofflichen Zusammensetzung, z. B. dem Klinkeranteil im Bindemittel, andererseits ein direkter Zusammenhang derart, dass mit zunehmendem Klinkeranteil im Bindemittel die Geschwindigkeit, mit welcher der Beton abbindet und verfestigt, zunimmt und somit die Zeit für das Erreichen einer bestimmten Festigkeit abnimmt. Allerdings ist von den heute üblichen Bestandteilen des Zementes der Klinker eine der teureren Komponentenen, so dass bei vielen Anwendungsfällen der Fachmann mit widersprüchlichen Forderungen konfrontiert ist, z. B. einerseits im Hinblick auf die Kosten der einzusetzenden Materialien einen möglichst billigen und somit einen geringen Klinkeranteil enthaltenden Zement, andererseits jedoch aus Gründen des Arbeitsfortschrittes und ggf. auch aus technischen Gründen einen Zement mit hohem Klinkeranteil zu verwenden, welcher z. B. zu einer hohen Abbindegeschwindigkeit des Betons und damit zu einer hohen Frühfestigkeit desselben führt, die ggf. nahe seiner maximalen Druckfestigkeit liegen kann.

Neben der stofflichen Zusammensetzung spielt auch die Mahlfeinheit, insbesondere die Korngrössenverteilung, bezüglich z. B. des Wasser- und/oder Fliessmittelbedarfs und der Frühfestigkeit eine wesentliche Rolle. Die Hinzufügung von Zusatzstoffen bzw. Zumahlstoffen zum Zementklinker, wie sie bei allen Normalzementen CEMII bis CEMV erfolgt, ergab bisher eine wesentlich geringere Frühfestigkeitsentwicklung. Dies ist offenbar darauf zurückzuführen, dass auch die Korngrössen und die Korngrössenverteilung der Zusatzstoffe und/oder Zumahlstoffe im Bindemittel dabei eine Rolle spielen und die Korngrössen sowie die Korngrössenverteilung dieser Zusatz- bzw. Zumahlstoffe z. B. bei den genannten Normalzementen sich von der Korngrössenverteilung beispielsweise bei CEMI, der ganz überwiegend aus gemahlenem Portlandzementklinker besteht, unterscheiden in der Weise, dass mit zunehmendem Anteil der Zusatz- und/oder Zumahlstoffe bei den Normalzementen der Anteil der Korngrössenfraktion 0 - 10 µm abnimmt und geringer ist als bei CEMI.

Die Bindemittel werden in ihrer Kornverteilung im allgemeinen nur durch den Mahlvorgang beeinflusst, bei welchem üblicherweise mehrere, wenn nicht alle Komponenten des Bindemittels gemeinsam vermahlen werden und die resultierenden Korngrössen der einzelnen Komponenten nicht nur von der Ausgangskorngrösse und der Dauer der Vermahlung, sondern auch davon abhängen, wie hart die einzelnen Ausgangsmaterialien sind. Bei üblicher gemeinsamer Vermahlung der den Zement bildenden Komponenten ergibt sich eine Korngrössenverteilung, die etwa der Gauss'schen Verteilungskurve entspricht. Deshalb weisen übliche Zemente eine vorgegebene Zusammensetzung bezüglich der Korngrössenverteilung auf. Eine Beeinflussung der Korngrössenverteilung herkömmlicher Zemente/Bindemittel durch den Mahlvorgang erfolgt zumeist in Abhängigkeit von der jeweils benutzten Zerkleinerungsmaschine, überwiegend im Bereich von 10 - 100 µm.

Versuche einer Optimierung der Korngrössenverteilung im Bindemittel zwecks Beeinflussung der Beschaffenheit des resultierenden Mörtels oder Betons waren im allgemeinen darauf gerichtet, eine Zusammensetzung nach Fuller zwecks Erzielung der dichtesten Kugelpackung zu erreichen. Eine merkliche Verbesserung der Eigenschaften des unter Verwendung eines solchen Bindemittels hergestellten Betons konnte dabei jedoch nicht festgestellt werden.

Der Erfindung liegt die Aufgabe zu Grunde, einen Zement bzw. ein Bindemittel verfügbar zu machen, der bzw. das mit einem möglichst geringen Klinkeranteil Eigenschaften aufweist, die zumindest teilweise denen des CEMI oder der CEMII-Zemente mit geringem Anteil an Zusatz- und/oder Zumahlstoffen nahe kommen bzw. diese sogar übertreffen. Dies soll insbesondere bezüglich mindestens einer der folgenden beispielhaft angeführten Eigenschaften bzw. Erfordernisse gelten wie Wasser- und Fliessmittelbedarf zwecks Erreichen einer definierten Konsistenz von Mörtel, Leim oder Beton, Wärmeentwicklung beim Abbinden, Schwindmass und Betonqualität.

Die Lösung dieser Aufgabe kann dahingehend zusammengefasst werden, dass die Bestandteile von Bindemitteln bzw. Zementen, die Zusatzstoffe und/oder Zumahlstoffe enthalten, so gemahlen werden, dass gegenüber bekannten derartigen Bindemitteln bzw. Zementen der Korngrössenbereich 0 bis etwa 10 µm merklich vergrössert wird. Dies wird vorzugsweise dadurch erreicht, dass der Korngrössenbereich von 0 bis etwa 10 µm insbesondere der Zusatz- und Zumahlstoffe eine merkliche Vergrösserung erfährt, so dass sich insgesamt eine Korngrössenverteilung ähnlich der des CEMI ergibt, welcher in der Regel die höchste Mahlfeinheit aller Normalzemente aufweist.

Somit lässt ein Aspekt der Lehre gemäss der Erfindung sich gegebenenfalls auch dahingehend zusammenfassen, dass die Kornzusammensetzung der Zusatz- und/oder Zumahlstoffe im Bereich 0
- 10 µm, vorzugsweise 1 - 10 µm, so erhöht wird, dass der Anteil der Fraktion 0 - 10 µm, vorzugsweise 1 - 10 µm, etwa dem Anteil der entsprechenden Fraktion im gemahlenen Klinker des Bindemittels entspricht oder diesem zumindest angenähert ist.
   Dadurch wird unter anderem erreicht, dass zum Einstellen einer definierten Konsistenz von Mörtel, Leim bzw. Beton ein geringerer Wasserbedarf und ggf. auch ein geringerer Fliessmittelbedarf als bei bekannten Bindemitteln/Zementen, welche neben Zementklinker auch wenigstens einen Zusatzstoff und/oder Zumahlstoff enthalten, erforderlich sind. Die Verringerung des Wasserbedarfs führt zu einer Verbesserung der Betonqualität. Falls erforderlich kann das zwecks Erreichen des angestrebten Effektes erforderliche genaue Ausmass der Vergrösserung des genannten Korngrössenbereiches durch einfache Versuche ermittelt werden.
   Eingehende Untersuchungen haben zudem gezeigt, dass auch die Frühfestigkeit eines unter Verwendung eines derartigen Bindemittels hergestellten Betons im Vergleich mit Betonen unter Verwendung bekannter Bindemittel mit einem ähnlichen Anteil an Zusatzstoffen und/oder Zumahlstoffen eine wesentliche Verbesserung erfährt. Unter "Frühfestigkeit wird hier die Festigkeit des Betons verstanden, die innerhalb eines Zeitraums von 12 Stunden bis 3 Tagen nach dem Einbringen des Betons erreicht wird.
   Es ist keinesfalls erforderlich, dass die Vergrösserung der Kornfraktion über den gesamten Bereich von 0 bis 10 µm gleichmässig erfolgt in dem Sinne, dass für jede Korngrösse dieselbe relative Vergrösserung ihres Anteils eintritt. Vielmehr wird der angestrebte Effekt in ausreichendem Masse auch bereits dann erreicht, wenn beispielsweise der Korngrössenbereich von 3 - 6 µm eine stärkere prozentuale Vergrösserung seines Anteils erfährt als z. B. die Korngrössenbereiche von 1 - 3 µm und von 6
- 10 µm. Der angestrebte Effekt tritt auch dann ein, wenn schmale Korngrössenbereiche innerhalb des genannten Bereiches von 0 - 10 µm, z. B. 0 - 1 µm, überhaupt keine Vergrösserung erfahren. Eine gezielte Vergrösserung des letztgenannten Bereiches würde ohnehin in vielen Fällen einen überproportionalen Aufwand erfordern.
   In Abhängigkeit von den mahltechnischen Gegebenheiten kann auch eine geringfügige Vergrösserung des Anteils der Kornfraktion von 10 µm bis etwa 40 µm eintreten, die jedoch zur Realisierung der Erfindung nicht erforderlich ist. Allgemein gilt, dass die korngrössenmässige Zusammensetzung eines CEMI-Bindemittels oder eine Annäherung an diese anzustreben ist. Dies gilt auch bezüglich der Eigenschaften des Bindemittels gemäss der Erfindung zumindest hinsichtlich der Endfestigkeit.
   Die Lehre gemäss der Erfindung erlaubt die Verwendung eines Zements, dessen Anteil an Klinker, insbesondere Portlandzementklinker, 65% nicht übersteigt, gegebenenfalls 30% nicht übersteigt, wobei im wesentlichen oder zumindest angenähert die Ergebnisse wie bei Verwendung eines CEMI-Bindemittels erzielt werden können. Es geht z. B. darum, ein Optimum bezüglich Wasserbedarf und gegebenenfalls Frühfestigkeit einerseits und den Kosten für das Bindemittel andererseits zu erreichen, wobei unter Umständen auch in Kauf genommen werden kann, dass die Endfestigkeit gegenüber bekannten Zementen, insbesondere solchen mit hohem Klinkeranteil, etwas geringer ist. Dies ist jedoch in der Mehrzahl der Fälle ohne Bedeutung, da die höhere Endfestigkeit von Betonen, die unter Verwendung bekannter Bindemittel hergestellt werden, ohnehin häufig nicht genutzt wird, also für bestimmte Anwendungsfälle nicht erforderlich ist.
   Insbesondere im Hinblick auf den Wasserbedarf werden als Zusatz- und/oder Zumahlstoffe vorzugsweise solche Stoffe verwendet, welche zur Erzielung der gleichen Konsistenz eine geringere Wasserzugabe benötigen als beispielsweise CEMI mit gleicher Kornzusammensetzung. Dies bedeutet, dass zweckmässigerweise Zusatz- und Zusatzmahlstoffe verwendet werden sollten, die mit Wasser überhaupt nicht oder nur wenig oder mit starker zeitlicher Verzögerung reagieren. Der geringere Wasserbedarf eines Bindemittels, das derartige Komponenten enthält, ist möglicherweise darauf zurückzuführen, dass Zemente mit einem hohen Gehalt an chemisch sehr reaktiven Komponenten, beispielsweise Freikalk und/oder Sulfat (CaO bzw. Anhydrit), sehr schnell chemisch mit dem Wasser reagieren, so dass ein merklicher Teil des zugegebenen Wassers, beispielsweise 6 - 15%, nach kurzer Zeit chemisch gebunden ist. Dieses Wasser steht zum Einstellen der Konsistenz des Bindemittels bzw. des unter seiner Verwendung hergestellten Betons nicht mehr zur Verfügung, so dass zur Erzielung der gewünschten bzw. erforderlichen Konsistenz zusätzliches Wasser zugegeben werden muss, welche Tatsache zu einem grösseren Wasserzusatz führt. Die Erfindung ermöglicht im Vergleich beispielsweise mit CEMI einen geringeren Wasserverbrauch, wenn die Zusatz- bzw. Zumahlstoffe so ausgewählt sind, dass sie nicht sofort erhebliche Teilmengen des zugefügten Wassers chemisch binden.
   Zwar wirkt die Vergrösserung des Anteils der Kornfraktion von 0
- 10 µm diesem Effekt eritgegen, da die Vergrösserueng der kleinsten Kornfraktion zu einer Vergrösserung der Gesamtoberfläche des Bindemittels führt. Dies wiederum bewirkt die adhäsive Verbindung eines grösseren Wasseranteils im Verhältnis zu einem Bindemittel mit gröberer Körnung, wobei der adhäsiv gebundene Waseranteil zur Beeinflussung der Konsistenz des Bindemittel-Wasser-Gemisches zumindest teilweise nicht zur Verfügung steht. Jedoch ist der dadurch verursachte grössere Wasserverbrauch so gering, dass er die angestrebte Verringerung desselben durch Reduzieren des unmittelbar nach der Wasserzugabe chemisch gebundenen Wasseranteils nicht ins Gewicht fällt. Tatsächlich kann die Wasserersparnis bei Verwendung eines Bindemittels gemäss der Erfindung im Vergleich zu einem CEMI-Bindemittel 8 - 10 % betragen.

Bei den die jeweilige Differenz im Zement bzw. Bindemittel zwischen 30 - 65% gemahlenem Klinker und 100% ausfüllenden Zusatz- und/oder Zumahlstoffen, deren Anteil somit 35 - 70% betragen wird, kann es sich um latenthyraulisch oder hydraulisch reagierende Stoffe, z. B. Abfallstoffe, oder auch reine anorganische aufbereitete Feinstoffe handeln, wie sie auch in vielen anderen Zementtypen Verwendung finden. Als Zusatz- bzw. Zumahlstoffe können z. B. aufbereitete Hüttensande, Flugaschen, Metakaoline, aber auch inerte Stoffe wie Kalkstein, jeweils allein oder mit wenigstens einem der genannten Stoffe oder auch einem weiteren, für diesen Zweck geeigneten Stoff, verwendet werden. Von besonderem Vorteil kann die Verwendung von Altbeton sein, da dieser im allgemeinen kostengünstig ist und die auf das Bindemittel dieses Betons zurückgehenden Bestandteile keineswegs immer inert sind, sondern zur Wirkung des resultierenden Zementes als Bindemittel beitragen können. Überdies ergibt sich bei Verwendung vergleichbarer Mühlen und vergleichbarer Mahldauer eine feinere Zusammensetzung als z. B. bei Schlacke.

Unter "Zusatzmahlstoff" wird das Material verstanden, das mit dem Klinker gemeinsam vermahlen, unter "Zusatzstoff" jenes Material, das getrennt gemahlen und im Bindemittel, gegebenenfalls auch erst in der Betonmischung homogenisiert wird.

Auch bei Anwendung der Erfindung kann es zweckmässig sein, den Zementklinker einerseits und die jeweils vorgesehenen Zusatzstoffe in der üblichen Weise gemeinsam zu vermahlen. Ob dies zur Erzielung der erfindungsgemässen Kornsummenkurve möglich ist, wird im wesentlichen abhängen von der Zusammensetzung des Mahlgutes, also der Auswahl der Zusatzstoffe und deren Eigenschaften, beispielsweise deren Ausgangskorngrösse und Härte. Es kann gemäss einem weiteren Merkmal der Erfindung aber auch zweckmässig, ggf. sogar erforderlich sein, zumindest einige der Komponenten, welche Bestandteile des Zementes sind, getrennt zu mahlen und danach die Gesamtheit aller Komponenten zu mischen und evtl. auch im Betongemisch zu homogenisieren. Es kann somit so vorgegangen werden, dass der getrennt aufbereitete Zusatzstoff im Betonwerk entweder mit dem Zement homogenisiert und als Bindemittel verwendet oder direkt dem Beton zugemischt wird. Eine derartige Vorgehensweise hätte den Vorteil, dass den Mahleigenschaften und der Ausgangskorngrösse jeder Komponente Rechnung getragen werden kann, um mit einem Minimum an Aufwand im Ergebnis eine Zementmischung zu erhalten, welche den erfindungsgemässen Kriterien entspricht.

Die erfindungsgemässe Vorgehensweise, bei welcher zumindest ein Teil der Komponenten des Bindemittels einzeln und/oder getrennt von anderen Komponenten vermahlen wird, bietet z. B. die Möglichkeit, eine der weniger harten Komponenten auf eine sehr geringe Korngrösse zu mahlen, um die angestrebte Kornsummenkurve zu erreichen. Wie im einzelnen verfahren wird, hängt auch von den jeweiligen Umständen ab. So können die feinsten Fraktionen für die Herstellung des Zementes durch Sichtung eines von vornherein feinkörnigen Materials, beispielsweise Flugasche, gewonnen werden. Schon bei der Gewinnung von Flugasche, also bei deren Abscheiden aus dem Rauchgasstrom, kann bereits eine Klassifizierung erfolgen, um eine Fraktion mit möglichst kleiner Korngrösse zu gewinnen.

Das Bindemittel gemäss der Erfindung ist auch deshalb kostengünstig, weil bei seiner Herstellung auf Grund des relativen geringen Klinkeranteils entsprechend weniger CO₂ beim Brennen des Klinkers entsteht.

Ein weiterer auf den relativ geringen Klinkeranteil zurück zu führender Vorteil besteht darin, dass bei den Abbindereaktionen weniger Wärme entsteht. Ferner ist das Ausmass des Schwindens des unter Verwendung des erfindungsgemässen Zementes hergestellten Betons geringer als bei üblichen Betons mit einer vergleichbaren hohen Frühfestigkeit.

### Ergebnis von Praxisversuchen an Hochleistungs-Betonen mit niedrigem Wasser/Beton-Wert

### Vergleichsversuche

Grundrezeptur: W/B=0,37 (alle Komponenten voll angerechnet; 380 kg/m3 Gesamtbindemittel)

**TABELLE I**

| Bindemittel | Druckfestigkeit in N/mm² | | | | |
|---|---|---|---|---|---|
| | 1d | | | 2d | 56d |
| | | Differenz | | | |
| | | abs. | % | | |
| a) 100% CEMIPZ | 41,0 | (20,5) | | 50,9 | 71,1 |
| b) 50% CEMIPZ+50%K_{f} | 24,9 | +4,4 | +21 | 31,6 | 52,2 |
| c) 50% CEMIPZ+50%S_{f} | 21,3 | +0,8 | + 4 | 31,8 | 68,7 |
| d) 50% CEMIPZ+17%K_{f} +33%S_{f} | 26,2 | +5,7 | +28 | 33,8 | 66,3 |
| e) 50% CEMIPZ+25%S_{f} +25%Bₑ | 25,8 | +5,3 | +26 | 33,3 | 63,8 |

**TABELLE II Kornzusammensetzung im Bereich 0 - 10 µm**

| Substanz | Durchgang in %; Trennschnitt bei | | |
|---|---|---|---|
| | 1 µm | 3 µm | 10 µm |
| CEMIPZ | 8,1 | 22,4 | 52,0 |
| CEMIHS | 6,3 | 18,2 | 44 |
| CEMII | 6,4 | 19,6 | 46 |
| Kalksteinmehl grob | 5,2 | 18,4 | 49 |
| Kalksteinmehl fein | 8,8 | 26,8 | 55 |
| Hochofenschlacke grob S₄g (normale Zusammensetzung) | 5,1 | 14,5 | 42 |
| Hochofenschlacke | | | |
| fein S₄f | 9,6 | 22,4 | 56 |
| gem. Altbeton | | | |
| fein Be | 11,1 | 34,3 | 59 |

Tabelle I zeigt die Entwicklung der Druckfestigkeit in Abhängigkeit von der Zusammensetzung des Bindemittels. Die Werte in Zeile a) betreffen einen Zement CEMIPZ gemäss europäischer Norm EN 197-1. Bei CEMIPZ handelt es sich um einen Zement, welcher ganz überwiegend aus gemahlenem Portlandzementklinker und nicht mehr als 5% Nebenbestandteilen besteht. Der unter Verwendung von CEMIPZ hergestellte Beton weist eine Frühfestigkeit nach einem Tag von 41,0 N/mm² auf. Dieser Wert dient als Bezugsgrösse für die anderen in Tabelle I angeführten Betone, die jeweils unter Verwendung eines Zementes hergestellt wurden, welcher 50% CEMIPZ und 50% wenigstens eines Zusatz- und/oder Zumahlstoffs enthält. Mithin ist bei einem Vergleich der Druckfestigkeiten nach 1d für den unter Verwendung von CEMIPZ hergestellten Beton nur der halbe Wert von dessen jeweiliger Druckfestigkeit anzusetzen. Die nach einem Tag erreichte Druckfestigkeit beträgt, wie vorstehend gesagt, 41.0 N/mm², so dass der theoretische Vergleichswert lediglich die Hälfte dieses Wertes beträgt, also 20,5 N/mm². Diese Annahme berücksichtigt die Tatsache, dass die im Verlauf der ersten 24 h eintretende Verfestigung der Betone, deren Bindemittel neben CEMI auch Zumahl- und Zusatzstoffe enthalten, im wesentlichen nur auf den Abbindereaktionen der von dem Portlandzementklinker gebildeten Komponente beruht, wohingegen die Abbindereaktionen der anderen Komponenten, also der Zusatz- bzw. Zumahlstoffe, erst später wirksam werden.

Der in Zeile b) der Tabelle I angeführte Beton ist unter Verwendung eines Zementes hergestellt, welcher 50% CEMIPZ und 50% eines feingemahlenen Kalksteinmehles enthält, welches nicht reaktiv im Sinne eines hydraulisch bzw. eines latent hydraulisch reagierenden Stoffes ist. Die Korngrössenverteilung dieses feingemahlenen Kalksteinmehls K_{f} ergibt sich aus Tabelle II, die erkennen lässt, dass der Durchgang auf einem Sieb mit der Maschenweite von 10 µm 55% beträgt. Dies stimmt grössenordnungsmässig mit den bei CEMIPZ üblichen Werten (vgl. Tabelle II) überein. Tabelle I zeigt, dass die Druckfestigkeit des entsprechenden Betons nach einem Tag 24,9 N/mm² beträgt. Dies stellt gegenüber dem Vergleichswert von 20,5 N/mm² des lediglich unter Verwendung eines CEMIPZ-Anteils hergestellten Betons eine Steigerung der Druckfestigkeit um 4,4 N/mm², also um etwa 21% dar.

Der in Zeile c) von Tabelle I angeführte Beton wurde unter Verwendung eines Bindemittels hergestellt, das zu 50% aus CEMIPZ und zu 50% aus feingemahlener Hochofenschlacke österreichischer Herkunft, VOEST, Donauwitz besteht. Die Korngrössenverteilung dieser Hochofenschlacke ergibt sich ebenfalls aus Tabelle II. Der Durchgang auf einem Sieb mit 10 µm Maschenweite beträgt 56%. Tabelle I zeigt, dass die Druckfestigkeit nach einem Tag 21,3 N/mm² beträgt, also um 0,8 N/mm² höher liegt als der Vergleichswert von 20,5 des ausschliesslich mit CEMIPZ hergestellten Betons. Dies ist eine Steigerung von 4%.

Das dritte Bindemittel gemäss der Erfindung in Tabelle I besteht aus 50% CEMIPZ, 17% des bereits erwähnten Kalksteinmehls und 33% der gemahlenen Hochofenschlacke gemäss Tabelle II. Die nach einem Tag erreichte Druckfestigkeit beträgt 26,2 N/mm². Sie liegt somit um 5,7 bzw. 28% höher als der Vergleichswert von 20,5.

Das letzte Bindemittel der Tabelle I besteht aus 50% CEMIPZ und einem Gemisch aus Zusatzstoffen, welches seinerseits 25% der gemahlenen Hochofenschlacke gemäss Tabelle II und 25% eines gemahlenen Recyclingbetons aufweist, dessen Korngrössenverteilung, soweit es die Fraktion 0 - 10 µm beträgt, ebenfalls aus Tabelle II ersichtlich ist. Die unter Verwendung dieses Bindemittels erreichte Druckfestigkeit nach einem Tag beträgt 25,8 N/mm². Dies bedeutet gegenüber dem Vergleichswert von 20,5 eine Steigerung von 5,3, also 26%.

Die in Tabelle II angeführten Werte von CEMII bezüglich der Kornzusammensetzung im Bereich von 0 - 10 µm lassen erkennen dass CEMII neben einer geänderten Phasenzusammensetzung noch etwas feiner ist als CEMIHS. Hierbei ist zu berücksichtigen, dass gewisse Überschneidungen auch bezüglich der Kornzusammensetzung zwischen CEMI-Bindemitteln und CEMII-Bindemitteln unvermeidbar sind, da, wie bereits erwähnt, CEMI ausser irgendwelchen Nebenbestandteilen, bei denen es sich im allgemeinen um Verunreinigungen handeln kann, zu mindestens 95% aus Portlandzementklinker besteht. Andererseits können CEMII-Zemente auch einen Anteil an Portlandzementklinkern bis zu 94% aufweisen, so dass, wenn in einem solchen Fall die praktisch immer vorhandenen Nebenbestandteile weniger als 5% ausmachen, sich stoffliche Zusammensetzungen ergeben können, die denen des CEMI sehr ähnlich sind. Dies gilt dann zwangsläufig auch für die Kornzusammensetzung, wobei zusätzlich zu berücksichtigen ist, dass letztere ohnehin auch von den jeweils benutzten Aufbereitungsmaschinen abhängt. So sind die Mahlfeinheiten der Tabelle II durch Benutzung eines Gerätes CILAS 920 bestimmt worden.

Der Einfluss der Korngrössenverteilung im Zusatz- bzw. Zumahlmittel ergibt sich auch aus der folgenden Tabelle III, in welcher der Fliessmittelbedarf für eine Konsistenz AB (Ausbreitung) von 56 cm ± 2 cm sowie das Endschwindmass nach einer Lagerung von 7 Tagen unter Wasser und 90 Tagen an der Luft des mit CEMIPZ bzw. dem jeweiligen Bindemittel mit Zusatz- bzw. Zumahlstoff(en) und der erfindungsgemässen Korngrössenverteilung hergestellten Betons angegeben sind.

Die Korngrössenverteilung entspricht den in Tabelle II jeweils angegebenen Werten. Die Grundrezeptur beträgt für die in Tabelle III angeführten Versuchsergebnisse W/B = 0,37, Größtkorn 16 mm, 380 kg/m³ Gesamtbindemittel sowie Wassergehalt gesamt 140,5 kg/m³.

**TABELLE III**

| Bindemittel | | Fliessm'bedarf | Schwindmaß in Promille |
|---|---|---|---|
| 100% | CEMIPZ | 1,7% | 0,37%ₒ |
| 50% | CEMIPZ+50%K_{f} | 0,86% | 0,21%ₒ |
| 50% | CEMIPZ+50%S_{f} | 0,92% | 0,18%ₒ |
| 50% | CEMIPZ+33%Sf+K_{f} | 0,88% | 0,22%ₒ |
| 50% | CEMIPZ+25%S_{f}+25%Bₑ | 0,51% | 0,09%ₒ |

Die Zusatz- und/oder Zumahlstoffe weisen die in der Tabelle II angegebenen Korngrössenanteile auf.

Tabelle III zeigt deutlich, dass die Vergrösserung des Korngrössenanteils von 0 - 10 µm bei den Zusatz- und/oder Zumahlmittel enthaltenden Bindemitteln sowohl bezüglich des Fliessmittelbedarfes als auch der Schwindmaße sogar bei einem Vergleich mit CEMIPZ einen günstigen Einfluss hat. Während der Fliessmittelbedarf bei ausschliesslicher Verwendung von CEMIPZ bei der angegebenen Ausbreitung 1,7% beträgt, liegt er bei allen anderen in Tabelle III angeführten Bindemitteln zum Teil merklich unter 1%. Dies gilt insbesondere für das feingemahlene Altbeton enthaltende Bindemittel. Die Ersparnis an Fliessmittel stellt insbesondere in Anbetracht der bei vielen Bauwerken einzusetzenden grossen Betonmengen einen merklichen wirtschaftlichen Vorteil dar.

Bei den Schwindmaßen ist ebenfalls eine merkliche Verbesserung gegenüber der Verwendung eines ausschliesslich CEMIPZ enthaltenden Bindemittels festzustellen, die bei einem Anteil von 50% feingemahlener Schlacke etwa 50%, bei Verwendung eines Gemisches von feingemahlener Schlacke und feingemahlenem Altbeton sogar erheblich darüber liegt.

Die folgende Tabelle IV lässt erkennen, dass auch bei anderen Betonarten, z. B. Fliessbeton mit sehr hoher Konsistenz, die erfindungsgemässen Wirkungen und Vorteile eintreten. Die Tabelle bezieht sich auf einen solchen Fliessbeton mit einem Ausbreitmass von 62 cm +/- 2 cm. Der Beton enthält 360 kg/m³ Bindemittel. Das Verhältnis von Wasser zu Bindemittel beträgt hier 0,472. Die Korngrössenzusammensetzung enspricht jeweils den in Tabelle I angegebenen Werten.

**TABELLE IV**

| Bindemittel | Druckfestigkeit in N/mm² | | | | Fl' mittel in % |
|---|---|---|---|---|---|
| | 1d | | | 28d | |
| | | Differenz abs. % | | | |
| 100% CEMIPZ | 38,4 | (19,2) | | 56,8 | 0,38 |
| 50% CEMIPZ+50%K_{f} | 18,4 | -0,8 | -4 | 46,2 | 0,35 |
| 50% CEMIPZ+50%S_{f} | 18,6 | -0,6 | -3 | 57,2 | 0,34 |
| 50% CEMIPZ+33%S_{f} | | | | | |
| +17%K_{f} | 17,8 | -1,4 | -7 | 55,3 | 0,36 |
| 50% CEMIPZ+50Be | 19,4 | +0,2 | +1 | 58,4 | 0,28 |

Auch Tabelle IV zeigt, dass der Einfluss der Mahlfeinheit der Zusatz- bzw. Zumahlstoffe auf die Endfestigkeit hier nicht von Nachteil ist und im Vergleich mit CEMIPZ, der im wesentlichen nur aus Portlandzementklinker besteht, tritt nur eine geringe Reduzierung der Frühfestigkeit des Betons nach einem Tag ein.

Von grösserer Bedeutung ist, dass die Menge an erforderlichem Fliessmittel im Vergleich mit dem ausschliesslich aus CEMIPZ bestehenden Bindemittel abnimmt, und zwar in besonders starkem Maße bei dem Bindemittel aus CEMIPZ und feingemahlenem Altbeton. Die Abnahme liegt hier in der Grössenordnung von 25%. Von Interesse ist auch die Tatsache, dass die Festigkeit nach 28 Tagen in der Mehrzahl der Fälle im Bereich der Festigkeit liegt, welche auch bei Verwendung eines ausschliesslich aus CEMIPZ bestehenden Bindemittels erreicht wird. Lediglich bei dem Bindemittel mit einem Gehalt von 50% nicht reaktivem Kalksteinmehl liegt eine merklich geringere Festigkeit nach 28 Tagen vor. Die Festigkeit bei Verwendung eines aus CEMIPZ und 50% feingemahlenem Altbeton bestehendem Bindemittels liegt sogar über der bei Verwendung aus-Bindemittels liegt sogar über der bei Verwendung ausschliesslich von CEMIPZ erreichbaren Festigkeit.

Im folgenden seien noch die Werte eines unter Verwendung eines Bindemittels aus 50% CEMIPZ und 50% feingemahlenem Altbeton hergestellten Betons im Vergleich mit einem ausschliesslich unter Verwendung von CEMIPZ hergestellten Betons angeführt, wobei der W/B-Wert 0,392 bei 360 kg/m³ Gesamtbindemittel beträgt.

**TABELLE V**

| Bindemittel | Druckfestigkeit in N/mm² | | | | Fl.'Mittel in % |
|---|---|---|---|---|---|
| | 1d | | 28d | | |
| | | Differenz | | | |
| | | abs. | % | | |
| 100% CEMIPZ | 39,4 | (19,7) | | 64,5 | 0,78 |
| 50% CEMIPZ+50%Be | 26,7 | +7,5 | 38 | 62,4 | 0,38 |

Als Vergleichswert wird hier der Wert von 19,7 (50% von 39,4) verwendet, der sich auf einen ausschliesslich unter Verwendung von CEMIPZ hergestellten Beton bezieht. Der Fliessmittelbedarf von 0,38% ist merklich geringer als bei dem ausschliesslich unter Verwendung von CEMIPZ hergestellten Betons der Tabelle V. Zwar ist der Fliessmittelbedarf gleich dem des ausschliesslich unter Verwendung von CEMIPZ hergestellten Betons der Tabelle IV, wobei jedoch zu berücksichtigen ist, dass der WB-Wert des Betons gemäss Tabelle V wesentlich kleiner ist als der der Betone gemäß Tabelle IV.

In der folgenden Tabelle VI soll der Zusammenhang zwischen der Festigkeitsentwicklung, insbesondere der Frühfestigkeitsentwicklung, einerseits und der Kornzusammensetzung andererseits unter einem anderen Blickwinkel dargelegt werden, nämlich durch einen Vergleich der Festigkeitsentwicklungen bei Verwendung von Zusatz- bzw. Zumahlstoffen gröberer und feinerer Kornzusammensetzung im Bereich 0 - 10 µm. Hierfür wurde ein Normmörtel gemäss österreichischer Norm EN 197-1 unter Verwendung von CEMIHS (hochsulfatbeständig) verwendet. Analog den Versuchen z. B. gemäss Tabelle I wurde dieser Mörtel unter Verwendung unterschiedlicher Bindemittel hergestellt und dann bezüglich der Entwicklung der Festigkeit nach einem Tag und nach 56 Tagen untersucht.

**TABELLE VI**

| Bindemittel | Druckfestigkeit in N/mm² | | | |
|---|---|---|---|---|
| | 1d | | | 56d |
| | | Differenz | | |
| | | abs. | % | |
| 100% CEMIHS | 25,8 | (12,9) | | 63,3 |
| 50% CEMIHS+50%Kg | 9,6 | -3,3 | -16 | 42,2 |
| 50% CEMIHS+50%K_{f} | 13,4 | +0,5 | + 4 | 45,8 |
| 100% CEMIHS+50%S_{4g} | 11,2 | -1,7 | -13 | 52,9 |
| 100% CEMIHS+50%S_{4f} | 16,8 | +3,9 | +30 | 54,9 |
| 100% CEMIHS+50%Beton_{f} | 18,9 | +6,0 | +47 | 50,1 |

Die Kornzusammensetzung im Bereich 0 - 10 µm der in Tabelle VI angeführten Zumahlstoffe Kalksteinmehl, Hochofenschlacke sowie Recyclingbeton ergibt sich aus Tabelle II.

Auch für Tabelle VI gilt, dass der Vergleichswert 12,9 N/mm² 50% des Wertes beträgt, welcher sich bei Verwendung eines Bindemittels ohne Zumahlstoffe ergibt. Bei Verwendung eines ausschliesslich aus CEMIHS bestehenden Bindemittels ergibt sich zwar ein Wert für die Druckfestigkeit von 25,8, welcher merklich unter dem in Tabelle I angeführten Wert von 41,0 bei ausschliesslicher Verwendung von CEMIPZ liegt. Dies ist darin begründet, dass die beiden Bindemittel CEMIPZ und CEMIHS unterschiedliche Festigkeiten erzeugen können. Zum anderen ist zu berücksichtigen, dass es sich im einen Fall (Tabelle I) um die Druckfestigkeit eines Betons handelt, wohingegen Tabelle VI die Festigkeit eines Mörtels angibt, der gemäss der vorstehend genannten Norm hergestellt worden war.

Jedenfalls zeigt Tabelle VI direkt den Zusammenhang zwischen der Kornzusammensetzung im Bereich von 0 - 10 µm einerseits und der erreichbaren Druckfestigkeit andererseits. Ferner wird deutlich, dass bei Verwendung von Altbeton der, wie an anderer Stelle bereits gesagt, keineswegs völlig inert zu sein braucht, eine besonders günstige Beeinflussung der Frühfestigkeit eintritt, wobei die Endfestigkeit nach 56 Tagen im Vergleich mit einem Hochofenschlacke enthaltenden Bindemittel nur geringfügig tiefer liegt. Hochofenschlacke ist ein seit Jahrzehnten bekannter Zusatz- und/oder Zumahlstoff für Zemente.

Tabelle VI lässt jedenfalls insbesondere im Zusammenhang mit den Zusatz- und/oder Zumahlstoffen Kalksteinmehl und Hochofenschlacke den Einfluss der Korngrösse deutlich erkennen, da sowohl bei feinem Kalksteinmehl K_{f} als auch bei feingemahlener Hochofenschlacke S_{4f} erheblich bessere Werte erzielt werden als bei den entsprechend gröberen Substanzen Kg bzw. S_{4g}.

Wenngleich die für die Betonherstellung unter Verwendung des Bindemittels gemäß der Erfindung üblichen Zuschläge, z. B Kies, möglicherweise auch eine Korngrössenfraktion von 0 - etwa 10 µm enthalten, ist deren Anteil am Gesamtgemisch normalerweise zu gering, als dass dadurch eine Beeinflussung der Beschaffenheit des resultierenden Betons erfolgte.

## Patentansprüche

1. Anorganisches hydraulisches Bindemittel, enthaltend ein Gemisch aus gemahlenem Zementklinker und wenigstens einem gemahlenen Zusatzstoff und/oder Zumahlstoff, **dadurch gekennzeichnet, dass** der Klinkeranteil im Bindemittel 65% nicht übersteigt und der Anteil der Kornfraktion von 0 - 10 µm in dem wenigstens einen Zusatz-und/oder Zumahlstoff merklich vergrössert ist.

2. Bindemittel nach Anspruch 1, **dadurch gekennzeichnet, dass** der wenigstens eine Zusatz- und/oder Zumahlstoff mit Wasser nicht und/oder wenig und/oder mit zeitlicher Verzögerung reagiert.

3. Bindemittel nach Anspruch 1, **dadurch gekennzeichnet, dass** das Ausmaß der Vergrößerung der Kornfraktion 0 - 10 µm so gewählt ist, dass die Korngrössenzusammensetzung des Bindemittels zumindest teilweise der des CEMI entspricht oder dieser zumindest angenähert ist.

4. Bindemittel nach Anspruch 1, **dadurch gekennzeichnet, dass** der Anteil der Kornfraktion von 0 - 10 µm in dem wenigstens einen Zusatz- und/oder Zumahlstoff nicht kleiner ist als der Anteil der gleichen Kornfraktion im gemahlenen Zementklinker des Gemisches.

5. Bindemittel nach Anspruch 1, **dadurch gekennzeichnet, dass** der Anteil der Kornfraktion von 0 - 10 µm im gesamten Bindemittel dem Anteil der gleichen Kornfraktion eines CEMI-Zementes entspricht.

6. Bindemittel nach Anspruch 1, **dadurch gekennzeichnet, dass** der Anteil der Kornfraktion von 0 - 10 µm im gesamten Bindemittel nicht weniger als 45% beträgt.

7. Bindemittel nach Anspruch 1, **dadurch gekennzeichnet, dass** lediglich der Anteil eines Teilbereichs der jeweiligen Kornfraktion von 0 - 10 µm in dem wenigstens einen Zusatz- und/oder Zumahlstoff zur Erzielung des angestrebten Effektes vergrössert ist.

8. Bindemittel nach Anspruch 1, **dadurch gekennzeichnet, dass** es wenigstens einen der folgenden gemahlenen Zusatzstoffe und/oder Zumahlstoffe enthält: Hüttensand, Flugasche, Meta-Kaolin, Kalkstein.

9. Bindemittel nach Anspruch 1, **dadurch gekennzeichnet, dass** es wenigstens Altbeton als gemahlenen Zusatz-und/oder Zumahlstoff enthält.

10. Verfahren zur Herstellung eines anorganischen hydraulischen Bindemittels, enthaltend ein Gemisch aus gemahlenem Zementklinker und wenigstens einem gemahlenen Zusatz- und/oder Zumahlstoff, wobei der Klinkeranteil im Bindemittel 65% nicht übersteigt, **dadurch gekennzeichnet, dass** die Bestandteile des Bindemittels derart aufbereitet werden, dass der Anteil der Kornfraktion 0 - 10 µm zumindest des wenigstens einen Zusatz- und/oder Zumahlstoffes merklich vergrössert wird.

11. Verfahren nach Anspruch 10, **dadurch gekennzeichnet, dass** der wenigstens eine Zusatz- und/oder Zumahlstoff mit Wasser nicht und/oder wenig und/oder mit zeitlicher Verzögerung reagiert.

12. Verfahren nach Anspruch 10, **dadurch gekennzeichnet, dass** das Ausmass der Vergrößerung so gewählt ist, dass die Korngrössenzusamensetzung des Bindemittels der des CEMI entspricht oder dieser angenähert ist.

13. Verfahren nach Anspruch 10, **dadurch gekennzeichnet, dass** der Anteil der Kornfraktion 0 - 10 µm in dem wenigstens einen Zusatz- und/oder Zumahlstoff nicht kleiner ist als der Anteil der entsprechenden Kornfraktion im gemahlenen Zementklinker.

14. Verfahren nach Anspruch 10, **dadurch gekennzeichnet, dass** wenigstens ein Teil der Komponenten des das Bindemittel bildenden Gemisches gemeinsam gemahlen wird.

15. Verfahren nach einem der Ansprüche 10 - 14, **dadurch gekennzeichnet, dass** wenigstens eine Komponente des das Bindemittel bildenden Gemisches durch Sichten eines ggf. gemahlenen Ausgangsmaterials gewonnen wird.

16. Verfahren nach einem der vorhergehenden Ansprüche 10 bis 15, **dadurch gekennzeichnet, dass** wenigstens ein Teil der das Bindemittel bildenden Komponenten getrennt gemahlen und die gemahlenen Komponenten dann miteinander vermischt und homogenisiert werden.

17. Verfahren zur Herstellung eines Betons unter Verwendung eines anorganischen hydraulischen Bindemittels nach einem der Ansprüche 1 - 9 und unter Anwendung des Verfahrens nach einem der Ansprüche 10 - 16, **dadurch gekennzeichnet, dass** zumindest ein Teil der Komponenten des Bindemittels bei der Betonherstellung hinzugefügt und das resultierende Gesamtgemisch direkt im Betonmischer homogenisiert wird.
